# FASCICULE DE BREVET EUROPEEN

(11) **EP 3 275 653 B1**
(45) Date de publication et mention de la délivrance du brevet: **06.02.2019**
(21) Numéro de dépôt: 17180582.3
(22) Date de dépôt: 10.07.2017
(51) Int. Cl.: B32B 37/10, B32B 37/15, B32B 5/02, D06N 7/00, E04F 15/10

(54) **PROCEDE DE FABRICATION EN CONTINU D'UN REVETEMENT DE SOL**
KONTINUIERLICHES HERSTELLUNGSVERFAHREN EINES BODENBELAGS
METHOD FOR THE CONTINUOUS PRODUCTION OF A FLOOR COVERING

(30) Priorité: 26.07.2016 FR 1657148
(43) Date de publication de la demande: 31.01.2018
(73) Titulaire: GERFLOR, 69100 Villeurbanne (FR)
(72) Inventeur: Ceysson, Olivier, 84500 Bollene (FR); Bosc, Freddy, 26700 Pierrelatte (FR)
(74) Mandataire: Cabinet Laurent & Charras

(56) Documents cités:
- WO-A1-2016/016864
- US-A1- 2005 249 912
- US-B1- 6 428 873
- Nadhir Lebaal: "Optimisation de la tête d'extrusion pour la fabrication de pièces thermoplastiques", , 15 juin 2007 (2007-06-15), XP055363928, Extrait de l'Internet: URL:https://tel.archives-ouvertes.fr/tel-0 0343764/document [extrait le 2017-04-11]

## Description

### DOMAINE TECHNIQUE

La présente invention concerne le secteur technique des procédés de fabrication de revêtements de sols à l'aide de matériaux polymères, notamment en polychlorure de vinyle ou similaires et, plus particulièrement, au procédé de fabrication en continu de revêtements de sols et murs comprenant au moins une armature de renfort.

### ART ANTERIEUR

Dans le domaine des revêtements de sol, il est bien connu des dalles ou lames comprenant au moins une armature de renfort liée entre au moins deux couches de matière plastique, par exemple obtenue à partir de polychlorure de vinyle (PVC). Des procédés connus de réalisation de tels revêtements de sol comprennent généralement une première étape consistant à réaliser une première couche de granulés de matière plastique, suivi d'une étape consistant à déposer, en surface de cette première couche, une armature de renfort, suivi d'une troisième étape consistant à déposer sur ladite armature de renfort une seconde couche de granulés de matière plastique. La structure multicouche ainsi obtenue est alors fondue et pressée au moyen d'une presse à double-bande, afin de lier les différentes couches entre elles et d'obtenir un revêtement de sol renforcé.

La demande de brevet internationale WO 2016/079225 décrit un procédé de fabrication en continu de revêtement de sol comprenant une armature de renfort. Le procédé décrit dans cette demande comprend une étape consistant à fournir une première couche de matériau thermoplastique sous forme de granulés, une étape consistant à fournir une armature de renfort et à la déposer sur ladite première couche de matériau, une étape consistant à lier ces deux couches par pressage, ladite première couche de granulé ayant été au moins partiellement fondue au préalable, cette étape de pressage étant suivie d'une étape consistant à fournir une seconde couche de matériau thermoplastique et à la déposer sur une face opposée de l'armature de renfort afin de lier la première couche, l'armature et la seconde couche entre elles pour former un panneau.

Un des inconvénients de ce procédé, et de façon plus générale des procédés utilisant des granulés de matière thermoplastique pressés est qu'ils ne permettent pas de garantir une épaisseur de couche suffisamment régulière. De fait, la position de l'armature de renfort dans la structure du revêtement de sol formé est incertaine. Il est ainsi communément admis qu'il est très difficile de garantir une tolérance d'épaisseur de couche obtenue par pressage de granulé inférieure à 0,1mm. Ce positionnement incertain, de l'armature de renfort engendre sur le revêtement de sol obtenu des problèmes d'équilibrage dû aux contraintes apportées à l'armature de renfort durant le procédé de fabrication.

Cette incertitude sur l'épaisseur du revêtement de sol obtenu oblige également à prévoir une étape de ponçage en sortie de presse afin de rectifier l'épaisseur finale de la structure obtenue, ceci entrainant des pertes de matière et des coûts supplémentaires de fabrication.

L'utilisation d'une presse à simple ou double-bande est également problématique pour garantir un bon rendement car la longueur de la presse détermine directement la vitesse maximale de la ligne de fabrication et ce quelle que soit l'épaisseur du revêtement ou de la couche de revêtement produite. Il n'est pas rare d'utiliser un même outil industriel pour plusieurs produits d'épaisseurs différentes et l'utilisation d'une presse à simple ou double-bande peut donc diminuer la rentabilité de certains procédés de fabrication.

D'autres procédés de fabrication en continu de tels revêtements de sol sont par ailleurs connus des documents US 2005/0249912 A1, US 6,428,873 B1 et WO 2016/016864 A1.

### EXPOSE DE L'INVENTION

L'un des buts de l'invention est donc de remédier à ces inconvénients en proposant un procédé de fabrication en continu de revêtement de sol comprenant au moins une première couche, une première armature de renfort et une seconde couche superposées dans cet ordre permettant de garantir une épaisseur de couche suffisamment régulière pour obtenir un positionnement optimal de l'armature de renfort, de limiter les pertes de matière et de diminuer les coûts de fabrication et ce quelle que soit l'épaisseur du revêtement de sol obtenu.

Dans ce but, l'invention concerne un premier procédé de fabrication en continu d'un revêtement de sol, comprenant au moins des étapes consistant à :
- réaliser en continu et faire défiler vers des moyens de lamination une première couche d'un matériau comprenant au moins une matière plastique au moyen d'une première calandre à au moins deux cylindres;
- réaliser en continu et faire défiler vers les moyens de lamination une seconde couche d'un matériau comprenant au moins une matière plastique au moyen d'une seconde calandre à au moins deux cylindres;
- faire défiler vers les moyens de lamination une première armature de renfort;
- laminer à chaud ensemble au moins la première couche, la première armature de renfort, et la seconde couche superposées dans cet ordre ;
dans lequel une couche de surface comprenant au moins une matière plastique et un film imprimé sont laminés à chaud ensemble avec au moins la première couche (1), la première armature de renfort (3), et la seconde couche (2) superposées dans cet ordre, pour les lier et obtenir un revêtement de sol comprenant successivement au moins la couche de surface, le film imprimé, la seconde couche (2), la première armature de renfort (3), la première couche (1).

Le procédé en continu selon l'invention permet ainsi de laminer à chaud ensemble au moins la première couche, la première armature de renfort, et la seconde couche, les première et seconde couches étant encore suffisamment chaudes et homogènes en température dans l'épaisseur de la couche pour pouvoir obtenir une bonne imprégnation de la première armature de renfort dans chacune des couches. Chaque couche est réalisée en continu et celles-ci défilent en même temps que la première armature de renfort vers les moyens de lamination. La lamination s'effectue ainsi directement ou très proche de la première et/ou de la seconde calandre et avant que chaque couche ne refroidisse à une température ne permettant pas une lamination à chaud correcte d'une armature de renfort avec la première et la seconde couche. A titre d'exemple, il est possible d'obtenir une bonne adhésion ou pénétration de l'armature à des valeurs de pressions classiques appliquées par des moyens de lamination si la température de la couche est supérieure à la température de Vicat de la formulation de la couche considérée. Chaque couche est ainsi suffisamment fondue et homogène en température pour ne pas déformer la première armature de renfort tout en l'imprégnant suffisamment. Contrairement à des procédés utilisant le pressage de granulés, la température de la couche est plus homogène quand celle-ci vient d'être réalisée par calandrage. Cette homogénéité est importante pour prévenir l'apparition de contrainte dans le revêtement dues à une mauvaise imprégnation de la première armature avec les première et seconde couches. Chaque couche atteint donc les moyens de lamination à une température suffisamment élevée pour que la lamination à chaud pour lier la première couche, la première armature de renfort et la seconde couche puisse être effectuée avec une valeur de pression appliquée par les moyens de lamination classique. L'utilisation de deux calandres successives permet ainsi d'optimiser l'imprégnation de la première armature sans avoir à réchauffer la première et/ou la seconde couche après que celles-ci aient été réalisées. La première armature est ainsi prise en sandwich entre deux couches de matière chaude et suffisamment fondue. Préférentiellement, le procédé selon l'invention peut utiliser deux calandres successives et espacées. Les deux calandres ont alors un fonctionnement indépendant et chaque épaisseur de couche obtenue par chacune des calandres est modifiable. De même, la vitesse de rotation de chacun des cylindres de chacune des calandres peut être modifiée. Dans un exemple utilisant deux calandres à deux cylindres, les deux calandres successives et espacées ne forment pas une calandre à quatre cylindres. A titre d'exemple, un procédé selon l'invention peut utiliser deux calandres successives espacées au maximum d'une dizaine de mètres, les moyens de lamination étant également distant au maximum d'une dizaine de mètres de chaque calandre. Préférentiellement les premières et seconde calandres sont espacées de moins de cinq mètres et les moyens de lamination sont également distant au maximum d'une dizaine de mètres, préférentiellement de cinq mètres, de chaque calandre, ce afin de limiter les pertes de chaleur dues à la distance entre chaque calandre et entre chacune des calandres et les moyens de lamination. Dans un exemple de mode de réalisation où la première calandre et distante de cinq mètres environ de la seconde calandre et des moyens de lamination, les moyens de lamination étant en contre appui sur l'un des cylindres de la seconde calandre, les première et seconde couches ainsi que la première armature de renfort défilent à environ vingt mètres par minutes vers les moyens de lamination pour obtenir un revêtement de sol dont l'épaisseur est comprise entre 1,5 et 9 mm, préférentiellement entre 2 et 5mm, plus préférentiellement entre 2 et 4mm.

Alternativement, et dans l'objectif de réaliser un revêtement de sol comprenant des moyens mâles-femelles de liaison ou d'assemblage, l'épaisseur du revêtement de sol obtenu est comprise entre 2,5mm et 9mm, préférentiellement entre 4 et 9mm. Des moyens équivalent utilisant une presse à double bande nécessiteraient une longueur minimale de vingt à trente mètres afin d'obtenir un revêtement de sol d'épaisseur comparable.

Alternativement, l'invention concerne également un procédé de fabrication en continu d'un revêtement de sol, comprenant au moins des étapes consistant à :
- réaliser en continu et faire défiler vers des moyens de lamination une première couche d'un matériau comprenant au moins une matière plastique au moyen d'une première extrudeuse à filière plate ;
- réaliser en continu et faire défiler vers les moyens de lamination une seconde couche d'un matériau comprenant au moins une matière plastique au moyen d'une seconde extrudeuse à filière plate ;
- faire défiler vers les moyens de lamination une première armature de renfort;
- laminer à chaud ensemble au moins la première couche, la première armature de renfort et la seconde couche superposées dans cet ordre ;
dans lequel une couche de surface comprenant au moins une matière plastique et un film imprimé sont laminés à chaud ensemble avec au moins la première couche (1), la première armature de renfort (3), et la seconde couche (2) superposées dans cet ordre, pour les lier et obtenir un revêtement de sol comprenant successivement au moins la couche de surface, le film imprimé, la seconde couche (2), la première armature de renfort (3), la première couche (1).

Cette alternative de réalisation présente les mêmes avantages que le premier procédé selon l'invention. Un avantage supplémentaire apporté par l'utilisation d'extrudeuses à filière plate et leur encombrement réduit par rapport à celui d'une calandre. De fait, la première extrudeuse à filière plate et la seconde extrudeuse à filière plate peuvent être disposées plus proches que deux calandres. Celle-ci peuvent notamment être face à face à quelques dizaines de centimètres, les lèvres de sorties des filières se faisant face. Dans une telle configuration, les couches provenant des filières plates peuvent être laminées à chaud ensemble avec la première armature par les moyens de lamination directement à la sortie d'une ou des extrudeuses et tant que la première et la seconde couche sont suffisamment chaudes. Chaque couche atteint donc les moyens de lamination à une température suffisamment élevée pour que la lamination à chaud pour lier la première couche, la première armature de renfort et la seconde couche puisse être effectuée avec une valeur de pression appliquée par les moyens de lamination classique. Contrairement à des procédés utilisant le pressage de granulés, la température selon l'épaisseur de la couche est également plus homogène quand celle-ci vient d'être réalisée par une extrudeuse à filière plate. Un autre avantage apporté par l'utilisation d'extrudeuse à filière plate et leur capacité à fournir des couches moussées directement en sortie de la filière plate. Pour cela il peut être introduit dans le « dry blend » des agents moussants qui s'expansent à la sortie de la filière dans la couche comprenant une matière plastique de manière à obtenir une couche moussée.

L'invention propose ainsi un procédé utilisant une première et une seconde calandre, ou alternativement un procédé utilisant une première et une seconde extrudeuse à filière plate, permettant de maitriser parfaitement l'épaisseur de fabrication de chacune des couches d'un matériau comprenant au moins une matière plastique. L'utilisation d'une calandre ou d'une extrudeuse à filière plate permet notamment d'obtenir une précision de l'ordre de 0,05mm. Ainsi le positionnement de la première armature dans la structure du revêtement de sol obtenu est précis à 0,05mm dans l'épaisseur. La stabilité dimensionnelle du revêtement est ainsi améliorée car celui-ci ne subit pas de contrainte qui pourraient être causées par une variation du positionnement de la première armature dans l'épaisseur trop importante.

D'autre part, le procédé proposé permet de corriger plus rapidement des problèmes d'équilibrage, pouvant entrainer des phénomènes d'incurvation positive (« curling » en langue anglaise) et/ou d'incurvation négative (« doming » en langue anglaise). Ceux-ci peuvent notamment être causés par une différence de température entre la première couche et la deuxième couche lorsque celles-ci sont laminées à chaud pour les lier à la première armature. Pour pallier à l'apparition de ces problèmes d'incurvation, il est ainsi possible de modifier l'épaisseur d'une des deux couches par rapport à l'autre, que ce soit la première ou la deuxième couche, afin de déplacer l'armature dans l'épaisseur du revêtement de sol et ainsi de le rééquilibrer. Il est bien évidement possible de modifier facilement l'épaisseur des deux couches. Ce changement d'épaisseur est particulièrement simple à réaliser dans les procédés selon l'invention, en opposition à des procédés utilisant des presses qui ne peuvent influer que sur l'épaisseur totale du revêtement. Un autre moyen de faire varier l'épaisseur dans un procédé par pressage et de déposer une quantité plus faible de granulés, l'épaisseur de couche obtenue est néanmoins moins maitrisable et surtout présente de plus fortes variations que par calandrage ou extrusion au travers d'une filière plate. Ainsi les couches obtenues par pressage nécessitent la plupart du temps d'être poncée afin de rectifier leur épaisseur et d'obtenir une épaisseur régulière. Cette étape de ponçage entraine un gaspillage de matière et une perte d'énergie conséquente.

A titre d'exemple, chacune des couches comprenant une matière plastique présente une épaisseur comprise entre 0,5mm et 3mm. Préférentiellement, chacune des couches comprenant une matière plastique présente une épaisseur comprise entre 1 et 2mm. L'épaisseur de la première couche est bien entendu indépendante de l'épaisseur de la seconde couche. L'épaisseur du revêtement de sol obtenu varie ainsi entre 1mm et 6mm environ, préférentiellement entre 2mm et 5mm environ, plus préférentiellement entre 2mm et 4mm environ. Alternativement, et dans l'objectif de réaliser un revêtement de sol comprenant des moyens mâles-femelles de liaison ou d'assemblage, l'épaisseur du revêtement de sol obtenu est comprise entre 2,5mm et 9mm, préférentiellement entre 4 et 9mm.

Il est bien connu de réaliser des revêtements de sols à partir d'éléments modulaires sous forme de panneaux, lames et/ou de dalles. Les panneaux, lames et/ou dalles sont par exemple obtenus par découpe d'un format dans le revêtement de sol selon l'invention. Leur fixation au sol s'effectue usuellement par un assemblage en emboitement des panneaux, lames et/ou des dalles présentant des moyens mâles-femelles de liaison ou d'assemblage. Par moyens mâles-femelles de liaison ou d'assemblage, on entend donc tout moyen de liaison ou d'assemblage mécanique pouvant être réalisé dans l'épaisseur du revêtement de sol et permettant de joindre deux panneaux, dalles ou lames ensemble. Des exemples de tels moyens sont des formes de queues d'arondes tel que décrit dans la demande de brevet européenne EP2843153 ou encore des moyens comprenant des languettes et rainures sur une partie male et des languettes et rainures correspondantes sur une partie femelle tel que décrits dans la demande de brevet internationale WO2016030627.

L'invention trouve un avantage particulier pour la réalisation de revêtements de sol comprenant des moyens mâles-femelles de liaison ou d'assemblage. Ces moyens mâles-femelles de liaison ou d'assemblage sont fortement sollicités mécaniquement lors de la pose du revêtement de sol et par le trafic sur le revêtement en usage. De ce fait, l'épaisseur de revêtement de sol nécessaire à leur résistance est supérieure à 2,5mm, et plus généralement comprise entre 2,5mm et 9mm voire entre 4mm et 9mm de manière à pouvoir usiner dans l'épaisseur du revêtement des moyens mâles-femelles de liaison robustes. Ces épaisseurs supérieures à 2,5mm, et plus généralement comprises entre 4mm et 9mm sont réalisables uniquement en employant des couches épaisses, dont l'épaisseur est notamment supérieure à 1mm, voire supérieure à 2mm. De fait, ces couches sont plus complexes à lier entre elles si celles-ci sont présentées à froid dans le procédé car il est nécessaire d'apporter une quantité d'énergie très importante pour que l'étape de lamination à chaud pour les lier à entre elles et avec l'armature soit effective. De ce fait, l'invention permet de limiter la quantité d'énergie à apporter à chacune des couches pour les lier en réalisant en continu la première et la deuxième couche et en les laminant à chaud avec la première armature en continu et avant que la diminution de la température de chacune des couches ne soit trop importante.

L'épaisseur de chaque couche étant maitrisée, il est également possible de s'affranchir d'une étape de ponçage réalisée classiquement en sortie d'une presse, l'épaisseur du revêtement de sol obtenu par les procédés selon l'invention étant régulière et constante. Les rendements en termes de perte de matière des procédés selon l'invention sont ainsi améliorés en comparaison avec des procédés de l'art antérieur. D'autre part, la vitesse de réalisation de chaque couche, qu'elle soit obtenue à l'aide d'une extrudeuse à filière plate ou d'une calandre, ne dépend pas de l'épaisseur de la couche obtenue. Ceci n'est pas le cas d'une presse à simple ou double bandes où la longueur de la presse détermine directement la vitesse maximum de réalisation pour une épaisseur de couche donnée.

La largeur de réalisation des revêtements de sols selon l'invention est généralement comprise entre un et quatre mètres environ, préférentiellement entre deux et trois mètres environ.

Les procédés selon l'invention présentent également un avantage d'un point de vue thermique. Des procédés de l'art antérieur utilisant des granulés de matière plastique pressés nécessitent plusieurs étapes de réchauffement et de refroidissement de la matière. Dans un premier temps, il est nécessaire de préparer les granulés de matière plastique, par exemple de polychlorure de vinyle (PVC), par un procédé classique qui comprend au moins des étapes consistant à :
- Chauffer une quantité de PVC en poudre entre 80°C et 90°C puis y ajouter une quantité de plastifiant ;
- Chauffer le mélange obtenu jusqu'à environ 110°C pour que le PVC se plastifie;
- Refroidir le mélange de PVC plastifié afin d'y incorporer une quantité de charge, de stabilisants, de pigments ou autres additifs, et mélanger. Le mélange obtenu se présente sous la forme d'une poudre appelée « dry blend » ou « compound » en langue anglaise ;
- Gélifier ce « dry blend » en le réchauffant à 170°C dans un mélangeur haute vitesse ou thermomixeur ;
- Extruder le mélange au travers d'une filière à trous circulaires, puis découper les cordons de matière fondue afin d'obtenir des granulés de 1 à 5 millimètres de diamètre.
- Refroidir les granulés de PVC ;

Une alternative à l'étape d'extrusion au travers d'une filière à trous circulaires consiste à introduire le boudin de matière fondue provenant de la sortie du mélangeur ou thermomixeur dans une calandre portée à 180°C afin d'obtenir une feuille calandrée. La feuille est alors refroidie puis broyée en granulés de différentes tailles.

Une fois les granulés obtenus, ceux-ci sont alors conditionnés en sac ou convoyés vers une presse à simple ou double bandes pour la réalisation d'une couche de matière plastique par pressage. Durant cette étape, les granulés sont à température ambiante de sorte qu'il est nécessaire, après les avoir distribués sur une bande porteuse, de les ramener à plus de 60°C voire 80°C à l'entrée d'une presse à double-bande. Cette température n'est cependant pas homogène à l'entrée de la presse. La presse est ensuite portée à 180°C pour fondre complètement les granulés. La presse permet alors d'obtenir une couche de matière plastique pour revêtement de sol, d'une épaisseur comprise entre 0,5mm et 3mm.

La présente invention permet de supprimer les étapes d'extrusion au travers d'une filière à trous circulaires, de découpe, de refroidissement, des granulés de matière plastique. Il est en effet possible d'alimenter directement et en continu des calandres ou des extrudeuses à filière plate à la suite de l'étape de gélification du « dry blend ». Le gain d'énergie apporté par les procédés selon l'invention en supprimant l'utilisation de granulés est alors estimé à environ 0,15 kilowatts par kilogrammes de matière pour une formulation classique de couche d'un revêtement de sol à base de polychlorure de vinyle. Ce gain d'énergie représente entre 25 et 30% de gain sur l'ensemble d'un procédé de réalisation d'un revêtement de sol à deux couches de matière plastique. Cette différence est notamment générée par l'étape de réchauffement des granulés en amont de la presse. D'autre part, le gain d'énergie apporté par le simple remplacement d'une presse à double bande métallique et de la ponceuse nécessaire à la rectification des épaisseurs de chaque couche par une calandre ou une extrudeuse à filière plate est estimé à environ 0,10 kilowatts par kilogrammes de matière transformée à une température similaire, par exemple de 180°C, par la presse, la calandre ou l'extrudeuse à filière plate. A épaisseur équivalente de couche d'un revêtement de sol, la consommation d'un procédé employant une presse est ainsi bien plus importante qu'un procédé employant deux calandres ou deux extrudeuses à filière plate. En combinant les gains apportés par la suppression de l'utilisation de granulés de matière plastique et d'une presse et l'utilisation de calandre ou d'extrudeuse à filière plate, le gain d'énergie des procédés selon l'invention peut atteindre 50% pour l'obtention d'un revêtement de sol à deux couches de matières plastique et une armature tel que définis. D'autre part, les investissements nécessaires à la mise en oeuvre du procédé selon l'invention sont bien moindres que des procédés utilisant une presse.

De plus, le procédé selon l'invention peut fonctionner sans aucune rupture de flux dû à une rupture de l'approvisionnement nécessaire en granulés de matière plastique. Les granulés de matière plastique sont en effet généralement stockés sous forme de sacs d'une tonne seulement qui doivent être renouvelés très régulièrement pour alimenter une presse. Dans le procédé selon l'invention, toutes les matières nécessaires à la réalisation d'un dry blend peuvent à cet effet être stockées en silos ou cuves de grands volumes afin d'alimenter en continu les calandres ou les extrudeuses à filière plate.

Ainsi, l'alimentation des calandres ou des extrudeuses en « dry blend » gélifié ou partiellement gélifié est réalisée en continu contrairement à celle d'une presse qui est la plupart du temps discontinue, des sacs de granulés devant être régulièrement introduits en amont de la presse.

De façon alternative et dans une variante encore plus économe en énergie du procédé selon l'invention, l'alimentation des calandres ou des extrudeuses à filière plate en matière peut être réalisé en continu par un procédé qui comprend au moins des étapes consistant à :
- Mélanger une quantité de polymère en poudre ou granulé avec éventuellement une quantité de plastifiant (en poudre ou liquide), une quantité de charge, de stabilisants, de pigments ou autres additifs,
- Extruder le mélange et le faire défiler vers l'entrée de la première et/ou de la deuxième calandre et/ou extruder le mélange directement grâce à la première et/ou la deuxième extrudeuse(s) à filière plate.

Il est également possible d'introduire dans une extrudeuse en amont d'une calandre ou dans une extrudeuse à filière plate utilisé dans le procédé selon l'invention un broyat obtenu à partir de revêtement de sol recyclé, éventuellement complété par des additifs ou une quantité de polymère.

Par matière plastique, on entend classiquement un polymère. Le polymère le plus utilisé est le polychlorure de vinyle (PVC), seul ou éventuellement en combinaison, notamment avec du polyvinylbutyrate (PVB), ou du polyvinyl acétate (PVA). Le polyuréthane (PU) est également une alternative au PVC, obtenu par réticulation entre l'huile de ricin ou le glycérol et un isocyanate, tel que décrit dans le brevet EP 2 307 609. Une autre alternative concerne l'utilisation de linoléum. L'acide polylactique (PLA) peut également être employé ou encore les polyoléfines tel que les polyéthylènes ou encore les polypropylènes.

Les couches comprenant au moins une matière plastique peuvent en outre contenir au moins un additif choisi dans le groupe suivant : plastifiants, charges minérales, stabilisants thermiques ou UV, agents dessicants, lubrifiants, agents de mise en oeuvre (« processing aids »), pigments, ignifugeants.

Les couches comprenant au moins une matière plastique peuvent en outre contenir des charges choisies dans le groupe comprenant le carbonate de calcium, les craies, le kaolin, le sulfate de baryum, le talc, les trihydrates d'aluminium, de la farine de bois ou de liège, ou de la silice.

Les plastifiants permettant d'obtenir la souplesse nécessaire des couches et peuvent être choisis dans le groupe comprenant les orthophtalates de haut poids moléculaire comme le phtalate de di-isononyle (DINP), le DINP hydrogénés (DINCH ou 1,2-cyclohexanedicarboxylic acid, diisononylester), DIDP (di-iso-décyl phatlate), les téréphtalates, les sébaçates (par exemple le sébaçate de dibutyle ou DBS), les adipates ou encore des plastifiants d'origines végétale tel que l'huile de soja epoxydée. De façon générale, il est employé des plastifiants compatibles avec la matière plastique de la couche considérée.

La formulation de chacune des couches du revêtement de sol obtenu par le procédé selon l'invention peut évidemment être différente, que soit dans le type de matière plastique ou les quantités respectives d'additifs ou de plastifiants.

Par armature de renfort, on entend une grille ou un voile susceptible d'améliorer les performances mécaniques et la résistance au poinçonnement et au roulage et permettre une meilleure stabilité dimensionnelle du revêtement de sol dans le temps. Une armature de renfort se présente par exemple sous la forme d'une grille ou d'un quadrillage de fils textiles d'épaisseur négligeable, ou bien d'un voile de verre. Alternativement, une armature de renfort est constituée d'une grille ou d'un quadrillage de fils textiles d'épaisseur négligeable, lié avec un voile de verre.

Les fils textiles d'une armature de renfort comprenant une grille présentent, de préférence, une grille d'une contexture supérieure à 2 x 2 et dont le titre des fils de trame et de chaine est compris entre 34 et 136 tex. Une armature de renfort permet d'augmenter les performances mécaniques et la résistance au poinçonnement et au roulage du revêtement de sol. Alternativement, les fils textiles d'une armature de renfort sont, de préférence, espacés les uns des autres de 3 mm, selon les dimensions longitudinale et transversale, et comprennent une masse linéique comprise entre 20 g/m et 70 g/m, avantageusement entre 35 g/m et 50 g/m.

Par armature de renfort sous forme de voile, on entend notamment un voile de verre. Des voiles de verres classiques présentent un grammage compris entre 20 g/m² et 80 g/m², préférentiellement entre 30 g/m² et 50 g/m². Des voiles de verres classiques présentent également une porosité (perméabilité à l'air) comprise entre 3400 et 9500 l/m².s. Des voiles de verres classiques présentent également une épaisseur comprise entre 0,30 et 0,50 mm.

De façon avantageuse, le procédé selon l'invention comprend une étape supplémentaire consistant à laminer à chaud ensemble au moins la première armature de renfort et la première couche pour les lier, avant de laminer à chaud ensemble au moins la première couche, la première armature de renfort et la seconde couche.

Préférentiellement, la première couche, la première armature de renfort, et la seconde couche sont laminées à chaud ensemble simultanément pour les lier et former le revêtement de sol.

De façon avantageuse, et dans le cas où le procédé selon l'invention est réalisé à l'aide d'une première calandre, l'étape consistant à laminer à chaud ensemble la première armature de renfort et la première couche pour les lier est réalisée par l'intermédiaire d'un cylindre en contre-appui avec l'un des cylindres de ladite première calandre.

De façon avantageuse, l'étape consistant à laminer à chaud ensemble la première armature de renfort et la première couche est réalisée par des moyens de lamination intermédiaires disposés entre la première calandre et les moyens de lamination ou respectivement entre la première extrudeuse à filière plate et les moyens de lamination. Alternativement les moyens de lamination intermédiaires sont disposés entre la première calandre et la seconde calandre ou respectivement entre la première extrudeuse à filière plate et la seconde extrudeuse à filière plate.

De façon avantageuse, et dans le cas où le procédé selon l'invention est réalisé à l'aide d'une seconde calandre, l'étape consistant à laminer à chaud ensemble la première couche, la première armature de renfort, et la seconde couche pour les lier est réalisée par l'intermédiaire d'un cylindre en contre-appui avec l'un des cylindres de la seconde calandre.

Avantageusement, le procédé comprend une étape supplémentaire consistant à déplacer et/ou supprimer de la matière plastique sur une face de la première couche ou de la seconde couche, non destinée à être en contact avec la première armature de renfort. Cette étape est idéalement réalisée sur la matière plastique chaude avant que la première ou la seconde couche n'atteignent les moyens de lamination de la première couche, la première armature et la seconde couche.

Avantageusement, l'étape consistant à déplacer et/ou supprimer de la matière plastique sur la face de la première couche ou de la seconde couche non destinée à être en contact avec la première armature de renfort est réalisée par au moins l'un des cylindres de la première calandre ou un cylindre disposé entre la première calandre et la seconde calandre ou respectivement par au moins l'un des cylindres de la seconde calandre.

Avantageusement, les moyens de lamination comprennent au moins un cylindre, l'étape consistant à déplacer de la matière plastique sur la face de la première couche ou de la seconde couche non destinée à être en contact avec la première armature de renfort est réalisée par au moins un cylindre des moyens de lamination.

Avantageusement, l'étape consistant à déplacer et/ou supprimer de la matière plastique sur la face de la première couche ou de la seconde couche non destinée à être en contact avec la première armature de renfort est réalisée par perforation, par rainurage, par gaufrage, par grainage ou par usinage.

De façon préférentielle, le procédé selon l'invention comprend au moins une étape supplémentaire dans laquelle une troisième couche comprenant au moins une matière plastique, et une seconde armature de renfort sont laminées à chaud ensemble avec au moins la première couche, la première armature de renfort, et la seconde couche superposées dans cet ordre, pour les lier et obtenir un revêtement de sol comprenant successivement au moins la troisième couche, la seconde armature de renfort, la seconde couche, la première armature de renfort, la première couche.

De façon préférentielle, le procédé selon l'invention comprend au moins une étape supplémentaire dans laquelle une sous-couche fonctionnelle est déposée sur une face de la première couche ou de la seconde couche, non destinée à être en contact avec la première armature de renfort, et est laminée à chaud ensemble avec la première couche, la première armature de renfort, et la seconde couche superposées dans cet ordre.

Avantageusement, ladite sous-couche fonctionnelle est un film préadhésivé, un textile non-tissé, une couche barrière, une mousse, une couche comportant des électrodes ou des capteurs électroniques.

### DESCRIPTION SOMMAIRE DES FIGURES

D'autres avantages et caractéristiques ressortiront mieux de la description qui va suivre de plusieurs variantes d'exécution, données à titre d'exemples non limitatifs, du procédé de fabrication et de ces alternatives conformes à l'invention, en référence aux dessins annexés sur lesquels :
- la figure 1 illustre, de manière schématique, un procédé selon l'invention utilisant une première et une seconde calandre ;
- la figure 2 illustre, de manière schématique, un procédé alternatif selon l'invention utilisant une première et une seconde extrudeuse à filière plate ;
- la figure 3 illustre, de manière schématique, un procédé avantageux selon l'invention permettant de déplacer et/ou supprimer de la matière à l'aide d'un cylindre de la première calandre ;
- la figure 4 illustre, de manière schématique, un procédé selon l'invention utilisant une première et une seconde calandre permettant l'obtention d'un revêtement de sol comprenant trois couches comprenant une matière plastique ;
- la figure 5 illustre, de manière schématique, un procédé alternatif selon l'invention utilisant une première et une seconde calandre permettant l'obtention d'un revêtement de sol comprenant trois couches comprenant une matière plastique ;
- la figure 6 illustre, de manière schématique, un procédé selon l'invention utilisant une première et une seconde extrudeuse à filière plate permettant l'obtention d'un revêtement de sol comprenant trois couches comprenant une matière plastique ;
- la figure 7 illustre, de manière schématique, un procédé selon l'invention utilisant une première et une seconde calandre et permettant l'obtention d'un revêtement de sol comprenant une sous-couche fonctionnelle ;
- la figure 8 illustre, de manière schématique, un procédé alternatif selon l'invention utilisant une première et une seconde calandre formant une calandre à quatre cylindres en S;

### DESCRIPTION DETAILLEE DE L'INVENTION

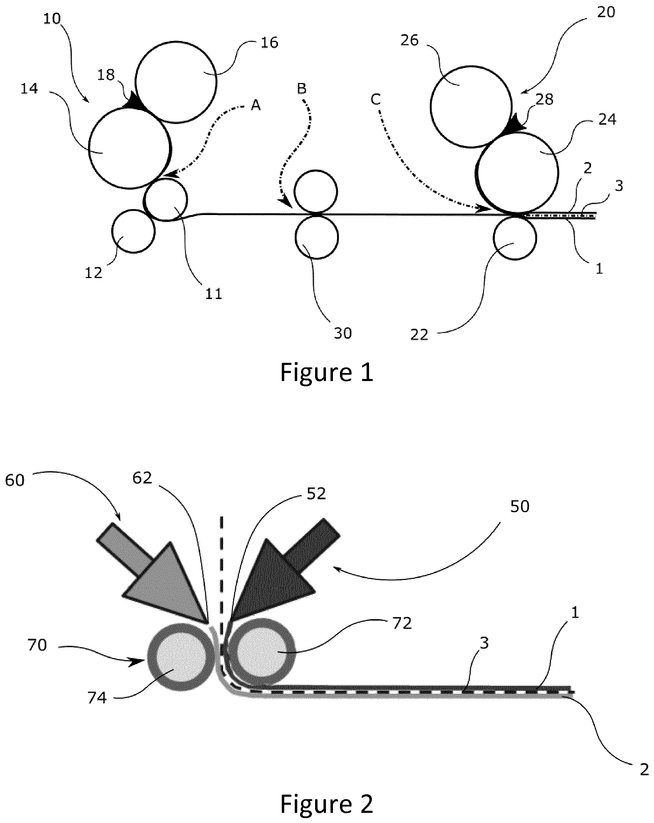

La figure 1 illustre un procédé de fabrication en continu d'un revêtement de sol selon l'invention ainsi que les équipements nécessaires à sa réalisation, notamment une première calandre (10) à deux cylindres (14, 16) et un cylindre de sortie (11) et une seconde calandre (20) à deux cylindres (24, 26). Les cylindres (14, 16, 24, 26) sont des cylindres de calandrage en ce sens qu'ils participent au réchauffement et/ou au travail mécanique de la matière introduite dans chaque calandre. Le cylindre (11) est un cylindre de sortie de la première calandre en ce sens qu'il vient décoller la couche qui vient d'être réalisée par la première calandre. Le cylindre (11) de sortie de la première calandre (10) peut être déplacé en appui ou non sur le cylindre (14) de la première calandre si on veut laminer dans l'entrefer entre les cylindres (11, 14) une armature, une couche ou un film. Le procédé selon l'invention permet de réaliser un revêtement de sol en continu, ledit revêtement de sol comprenant une première couche (1) d'un matériau comprenant au moins une matière plastique, une première armature de renfort (3), et une seconde couche (2) d'un matériau comprenant au moins une matière plastique superposées dans cet ordre.

Dans l'exemple de réalisation illustré sur la figure 1, la matière nécessaire à la réalisation par calandrage de la première couche (1) est introduite en continu entre les cylindres (14) et (16), cette zone étant communément désignée comme l'entrefer d'une calandre, de sorte à former un bourrelet (18). Pour la réalisation de revêtement de sol à base de PVC, les cylindres sont par exemple portés à une température d'environ 180°C. La matière nécessaire à la réalisation par calandrage de la seconde couche (2) est introduite en continu entre les cylindres (24) et (26), de sorte à former un bourrelet (28). Les première et seconde calandres permettent ainsi d'obtenir une première et une seconde couche d'épaisseurs régulières et maitrisées. Les moyens de lamination (22, 24) sont constitués d'un cylindre (22) en contre appui sur le cylindre (24) de calandrage de la seconde calandre (20).

Le procédé en continu selon l'invention illustré sur la figure 1 comprend au moins des étapes consistant à :
- réaliser en continu et faire défiler vers les moyens de lamination (22, 24) la première couche (1) d'un matériau comprenant au moins une matière plastique au moyen de la première calandre (10) à au moins deux cylindres (14, 16);
- réaliser en continu et faire défiler vers les moyens de lamination (22, 24) la seconde couche (2) d'un matériau comprenant au moins une matière plastique au moyen de la seconde calandre (20) à au moins deux cylindres (24, 26);
- faire défiler vers les moyens de lamination (22, 24) une première armature de renfort (3) ;
- laminer à chaud ensemble au moins la première couche (1), la première armature de renfort (3), et la seconde couche (2) superposées dans cet ordre pour les lier et former le revêtement de sol.

Selon la figure 1, l'étape consistant à laminer à chaud ensemble au moins la première couche (1), la première armature de renfort (3), et la seconde couche (2) superposées dans cet ordre pour les lier et former le revêtement de sol peut être réalisé en introduisant et en faisant défiler la première armature de renfort (3) selon la flèche C. La première armature de renfort (3) est ainsi introduite entre la première et la seconde couche, celles-ci étant enserrées dans l'entrefer formé par les cylindres (24) et (22). L'étape consistant à laminer à chaud ensemble la première couche (1), la première armature de renfort (3), et la seconde couche (2) pour les lier est ainsi réalisée par les moyens de lamination (22, 24) qui se présentent alors sous la forme d'un cylindre (22) en contre-appui avec l'un des cylindres (24) de la seconde calandre (20).

Les moyens de lamination (22, 24) laminent ainsi à chaud pour les lier et de façon simultanée la première couche (1), la première armature de renfort (3), et la seconde couche (2) superposées dans cet ordre. La première couche (1) et la seconde couche (2) sont réalisées en continu et de façon simultanée. La première couche (1), la seconde couche (2) et la première armature de renfort (3) défilent également simultanément vers les moyens de lamination (22, 24), de manière à pouvoir être laminée à chaud en continu et simultanément à la réalisation de la première (1) et seconde couche (2).

La première couche étant réalisée en continu, à mesure qu'elle défile celle-ci atteint les moyens de lamination (22, 24) à une température suffisante et répartie de façon assez homogène dans l'épaisseur de la couche pour garantir une bonne pénétration de la première armature (3) dans la première couche (1). La seconde couche (2) étant également réalisée en continu et défilant vers les mêmes moyens de lamination (22, 24) sa température est également suffisante et répartie de façon assez homogène pour garantir une très bonne pénétration de la première armature (3) dans la seconde couche (2). Chaque couche est ainsi suffisamment fondue et homogène en température pour ne pas déformer la première armature de renfort tout en l'imprégnant suffisamment. L'utilisation d'une première et d'une seconde calandre successives permet ainsi d'optimiser l'imprégnation de la première armature de renfort (3) sans avoir à réchauffer pour les ramollir la première (1) et/ou la seconde couche (2) après que celles-ci aient été réalisées. La première armature de renfort est ainsi prise en sandwich entre deux couches de matière chaude et suffisamment fondue. Chaque couche atteint donc les moyens de lamination (22, 24) à une température suffisamment élevée pour que la lamination à chaud pour lier la première couche, la première armature de renfort et la seconde couche puisse être effectuée avec une valeur de pression appliquée par les moyens de lamination classique. A titre d'exemple, une installation selon la figure 1 peut utiliser deux calandres successives espacées de moins d'une dizaine de mètres, préférentiellement de moins de six mètres, les moyens de lamination étant disposés à moins de dix mètres, préférentiellement à moins de six mètres de chacune des calandres. Un espacement inférieur à une dizaine de mètres permet ainsi de limiter la perte de chaleur de la première couche (1) entre la sortie de la première calandre (10) et les moyens de lamination (22, 24) à environ 30%, soit une température de la première couche de 130°c environ quand celle-ci atteint les moyens de lamination (22, 24), la première calandre (10) étant portée à 180°C. Préférentiellement la première (10) et la seconde calandre (20) sont espacées de moins de six mètres et les moyens de lamination sont au contact ou proche de la seconde calandre afin de limiter les pertes de chaleur dues à la distance entre chaque calandre et entre chacune des calandres et les moyens de lamination.

De façon avantageuse et comme illustré sur la figure 1, la première couche (1), la première armature de renfort (3), et la seconde couche (2) sont laminées à chaud ensemble simultanément pour les lier et former le revêtement de sol. Cette étape est réalisée sur la figure 1 par les moyens de lamination (22, 24). Cette variante présentant une étape de lamination simultanée des deux couches et de l'armature permet d'obtenir un procédé moins couteux en investissements et plus simple à mettre en oeuvre, un seul moyen de lamination étant à contrôler.

Bien entendu, l'invention ne se limite pas à l'utilisation de calandres à deux cylindres de calandrage. Des alternatives sont ainsi envisageables avec des calandres à trois cylindres, à quatre cylindres en L, à quatre cylindres en L inversé, à quatre cylindres en Z, à quatre cylindres en S, à quatre cylindres en S modifié ou encore à cinq cylindres en L. Chacune de ces variantes présentant des avantages propres à la configuration des cylindres de calandrage.

Avantageusement, le procédé selon l'invention comprend une étape supplémentaire consistant à laminer à chaud ensemble au moins la première armature de renfort (3) et la première couche (1) pour les lier, avant de laminer à chaud ensemble au moins la première couche (1), la première armature de renfort (3), et la seconde couche (2) pour les lier. Selon la figure 1 et à titre d'exemple, la première armature de renfort (3), et la première couche (1) peuvent être superposées et laminées à chaud pour les lier en introduisant et en faisant défiler la première armature de renfort (3) selon la flèche A à l'entrefer entre le cylindre (12) en contre appui sur la cylindre de sortie de la première calandre (11) ceux-ci devenant alors des moyens de lamination de la première armature (11, 12). Alternativement, en déplaçant le cylindre (11) en appui sur le cylindre (14), la première armature de renfort (3), et la première couche (1) peuvent être superposées et laminées à chaud pour les lier en introduisant et en faisant défiler la première armature de renfort (3) selon la flèche A à l'entrefer entre le cylindre (14) et le cylindre (11) de sortie de la première calandre (10) ceux-ci devenant alors des moyens de lamination de la première armature (11, 14). L'étape consistant à laminer à chaud ensemble la première armature de renfort (3) et la première couche (1) pour les lier est ainsi réalisée par l'intermédiaire du cylindre (11) en contre-appui avec l'un des cylindres de la première calandre (14). Ces deux variantes permettent de garantir une parfaite pénétration de la première armature de renfort (3) dans la première couche (1). Ceci peut notamment être avantageux si la première couche (1) présente une épaisseur supérieure à la seconde couche (2) ou des matériaux augmentant la perte de chaleur lors du défilement de la première calandre vers les moyens de lamination (22, 24).

Alternativement l'étape consistant à laminer à chaud ensemble la première armature de renfort (3) et la première couche (1) est réalisée par des moyens de lamination intermédiaires (30) disposés entre la première calandre (10) et les moyens de lamination (22, 24), la première couche défilant vers les moyens de lamination intermédiaires (30) avant de défiler vers les moyens de lamination (22, 24). Toujours selon la figure 1, la première armature de renfort (3), et la première couche (1) peuvent être superposées et laminées à chaud pour les lier en introduisant et en faisant défiler la première armature de renfort (3) selon la flèche B à l'entrefer des moyens de lamination intermédiaires (30) disposés entre la première calandre (10) et les moyens de lamination (22, 24). Cette variante permet de définir une température spécifique de lamination de la première couche et de la première armature en positionnant les moyens de lamination intermédiaires (30) à une distance de la première calandre définie en fonction de la température recherchée. La température de la première couche diminuant proportionnellement à son éloignement de la première calandre. Ainsi, en fonction des matériaux et de la formulation de la première couche, le procédé proposé permet une plus grande flexibilité sur la température de lamination de la première couche quand celle-ci atteint les moyens de lamination intermédiaires (30).

La figure 2 illustre un procédé alternatif de fabrication en continu d'un revêtement de sol selon l'invention ainsi que les équipements nécessaires à sa réalisation, notamment une première extrudeuse à filière plate (50) et une seconde extrudeuse à filière plate (60). Ce procédé alternatif selon l'invention permet également de réaliser un revêtement de sol en continu, ledit revêtement de sol comprenant une première couche (1) d'un matériau comprenant au moins une matière plastique, une première armature de renfort (3), et une seconde couche (2) d'un matériau comprenant au moins une matière plastique superposées dans cet ordre.

Dans l'exemple de réalisation illustré sur la figure 2, la matière nécessaire à la réalisation par extrusion de la première couche (1) est introduite en continu dans la première extrudeuse à filière plate (50). La matière nécessaire à la réalisation par extrusion de la seconde couche (2) est également introduite en continu dans la seconde extrudeuse à filière plate (60). Les première et seconde extrudeuses permettent ainsi d'obtenir une première et une seconde couche d'épaisseurs régulières et maitrisées. Des moyens de lamination (70) sont constitués de deux cylindres (72,74) en contre appui. Les filières plates se font face, de sorte que les lèvres de sortie (52), (62) d'où proviennent les couches réalisées sont proches l'une par rapport à l'autre et proches des moyens de lamination (70).

Ce procédé alternatif de fabrication en continu d'un revêtement de sol comprend alors au moins des étapes consistant à :
- réaliser en continu et faire défiler vers les moyens de lamination (70) une première couche (1) d'un matériau comprenant au moins une matière plastique au moyen de la première extrudeuse à filière plate (50);
- réaliser en continu et faire défiler vers les moyens de lamination (70) une seconde couche (2) d'un matériau comprenant au moins une matière plastique au moyen d de la seconde extrudeuse à filière plate (60);
- faire défiler vers les moyens de lamination (70) une première armature de renfort (3) ;
- laminer à chaud ensemble au moins la première couche (1), la première armature de renfort (3), et la seconde couche (2) superposées dans cet ordre pour les lier et former le revêtement de sol.

La première couche (1) et la seconde couche (2) sont réalisées en continu et de façon simultanée. La première couche (1), la seconde couche (2) et la première armature de renfort (3) défilent également simultanément vers les moyens de lamination (70), de manière à pouvoir être laminée à chaud en continu et simultanément à la réalisation de la première (1) et seconde couche (2).

Les extrudeuses en filière plate présentant un encombrement particulièrement réduit en comparaison avec des calandres, il est ainsi possible de les disposer au plus proche des moyens de lamination (70), par exemple à moins d'un mètre entre les lèvres de sortie de chaque extrudeuse (52,62) et l'entrefer des moyens de lamination (70) constitué par les deux cylindres (72,74) en contre appui. De cette manière la perte de chaleur de chacune des couches est minimale entre l'instant où elles sont réalisées et l'instant où elles sont laminées à chaud avec la première armature de renfort (3) pour les lier. Pour une formulation à base de PVC, de plastifiant et de charges classique, la température de lamination est d'environ 130°C. La pénétration de la première armature de renfort (3) dans chacune des couches est ainsi optimisée. Son positionnement entre chacune des couches est également régulier. Le revêtement de sol obtenu présente ainsi une très bonne stabilité dimensionnelle. De plus ce procédé est particulièrement économique en énergie puisqu'il permet d'éviter d'avoir à réchauffer l'une ou l'autre de couche pour les laminer à chaud tout en étant compact dans son empreinte au sol. Chaque couche atteint donc les moyens de lamination (70) à une température suffisamment élevée pour que la lamination à chaud pour lier la première couche, la première armature de renfort et la seconde couche puisse être effectuée avec une valeur de pression appliquée par les moyens de lamination classique.

De façon avantageuse et comme illustré sur la figure 2, la première couche (1), la première armature de renfort (3), et la seconde couche (2) sont laminées à chaud ensemble simultanément pour les lier et former le revêtement de sol. Cette étape est réalisée sur la figure 2 par les moyens de lamination (70).

Avantageusement, le procédé alternatif selon l'invention comprend une étape supplémentaire consistant à laminer à chaud ensemble au moins la première armature de renfort (3) et la première couche (1) pour les lier, avant de laminer à chaud ensemble au moins la première couche (1), la première armature de renfort (3), et la seconde couche (2). Ainsi, l'étape consistant à laminer à chaud ensemble la première armature de renfort (3) et la première couche (1) peut être réalisée par des moyens de lamination intermédiaires disposés entre la première extrudeuse à filière plate (50) et la seconde extrudeuse à filière plate (60), plus précisément entre la première extrudeuse à filière plate (50) et les moyens de lamination (70) permettant de lier ensemble la première couche, la première armature et la seconde couche. Dans cette alternative, ces moyens de lamination intermédiaires laminent à chaud pour lier la première armature de renfort (3) et la première couche (1).

La matière introduite dans chaque calandre et/ou extrudeuse à filière plate est avantageusement réalisé en continu à partir d'un procédé comprenant des étapes consistant à :
- Chauffer et mélanger en continu une quantité de matière plastique en poudre et une quantité de plastifiant ;
- Refroidir en continu le mélange de matière plastique plastifié afin d'y incorporer en continu une quantité de charge, d'additifs, de pigments,..., et mélanger. Mélanger en continu la matière plastique plastifié et les charges, additifs, et pigments afin d'obtenir une poudre appelée « dry blend » ou « compound » en langue anglaise ;
- Gélifier ce « dry blend » en le réchauffant dans un mélangeur ou thermixeur en continu;

Le « dry blend » ou « compound » gélifié peut alors être introduit directement et en continu dans une ou les calandres, alternativement dans une ou les extrudeuses. A titre d'exemple, le « dry blend » ou « compound » gélifié peut se présenter sous la forme d'un bourrelet de matière fondue réalisé en continu à partir d'un malaxeur ou d'un co-malaxeur.

La présente invention permet ainsi de ne pas avoir à mettre en oeuvre des étapes d'extrusion à travers une filière à trous circulaire, de découpe, de refroidissement, et d'obtention de granulés de matière plastique. Le gain d'énergie apporté par les procédés selon l'invention en supprimant l'utilisation de granulés est alors estimé à 0,15 kilowatts par kilogrammes de matière pour une formulation de matière classique d'une couche d'un revêtement de sol à base de polychlorure de vinyle.

Encore plus avantageusement et dans une variante du procédé ou la/les calandre et/ou extrudeuse(s) à filière plates sont alimentées en continu, le procédé selon l'invention comprend des étapes consistant à :
- Mélanger une quantité de polymère en poudre ou granulé avec éventuellement une quantité de plastifiant (en poudre ou liquide), une quantité de charge, de stabilisants, de pigments ou autres additifs,
- Extruder le mélange et le faire défiler vers l'entrée de la première et/ou de la deuxième calandre et/ou extruder le mélange directement grâce à la première et/ou la deuxième extrudeuse(s) à filière plate

De façon avantageuse et quel que soit le procédé selon l'invention, le procédé comprend une étape supplémentaire consistant à déplacer et/ou supprimer de la matière plastique sur une face de la première couche (1) ou de la seconde couche (2), non destinée à être en contact avec la première armature de renfort (3). Par une étape consistant à déplacer et/ou supprimer de la matière plastique sur une face de la première couche (1) ou de la seconde couche (2), non destinée à être en contact avec la première armature de renfort (3) on entend toute opération permettant de structurer ladite face pour y créer une structure particulière non plane. Cette structure peut consister en une série de rainures, un gaufrage, un usinage, un grainage, en des perforations débouchant ou non dans l'épaisseur de chaque couche ou toute forme de reliefs ou de creux apportées à la surface plane initialement formée par la face de ladite couche. Cette structure peut également être apportée par un grainage permettant d'obtenir un décor imitant en relief, par exemple une imitation de pores et de nervure de bois ou encore de surface d'une pierre ou d'un carreau de carrelage. Cette étape consistant à déplacer et/ou supprimer de la matière plastique est idéalement réalisée pendant que la matière plastique est chaude à savoir juste après que la couche ait été réalisée ou pendant sa réalisation.

Il est particulièrement avantageux de procéder à cette étape dans un procédé selon l'invention dans la mesure où cette étape peut être effectuée sur une première couche (1) ou une seconde couche (2) qui vient d'être réalisée et à mesure que celle-ci défile vers les moyens de lamination (22, 24) ou (70). La face de la couche sur laquelle la matière plastique est déplacée et/ou supprimée est donc encore suffisamment chaude pour pouvoir être texturée sans avoir à apporter d'énergie supplémentaire. Une opération de perforation, de rainurage, de gaufrage ou d'usinage est donc plus simple à réaliser et moins couteuse en énergie.

Cette étape peut par exemple être réalisée par un procédé de gaufrage utilisant un cylindre sur lequel sont gravés des motifs. En appliquant la couche de matière chaude sur le cylindre, la matière est déplacée de manière à former un motif de reliefs et de creux, selon le motif du cylindre.

Cette étape peut également être réalisée par une série de lames ou de couteaux disposés au contact de la face de la couche où l'on souhaite déplacer et/ou supprimer de la matière pendant que celle-ci défile vers les moyens de lamination (22, 24) ou (70). Des lames peuvent ainsi venir réaliser des rainures dans le sens de défilement de la couche en déplaçant de la matière. Des lames peuvent également supprimer une quantité de matière dans l'épaisseur de la couche afin de l'alléger. Un exemple d'utilisation de lames pour supprimer la matière est par exemple décrit dans la demande internationale WO 2014/007738 déposée par la société Valinge flooring technology. Dans un souci d'économie d'énergie et de gain de matière, la matière supprimée durant cette étape peut directement être réintroduite dans la première ou la seconde calandre ou dans la première ou seconde extrudeuse à filière plate. Si la matière est réintroduite suffisamment rapidement après que celle-ci ait été ôtée à la couche, celle-ci peut être réintroduite en continu sans qu'il soit nécessaire de la réchauffer avant son introduction.

Ainsi, dans la variante du procédé selon l'invention utilisant une première calandre (10) et une seconde calandre (20), l'étape consistant à déplacer de la matière plastique sur la face de la première couche (1) ou de la seconde couche (2) peut être réalisée par au moins l'un des cylindres (14) de la première calandre (10) ou respectivement par au moins l'un des cylindres (24) de la seconde calandre (20) , ledit cylindre (14, 24) comprenant un motif en relief (32). Alternativement, cette étape est réalisée par un cylindre (30) disposé entre la première calandre (10) et les moyens de lamination (22, 24).

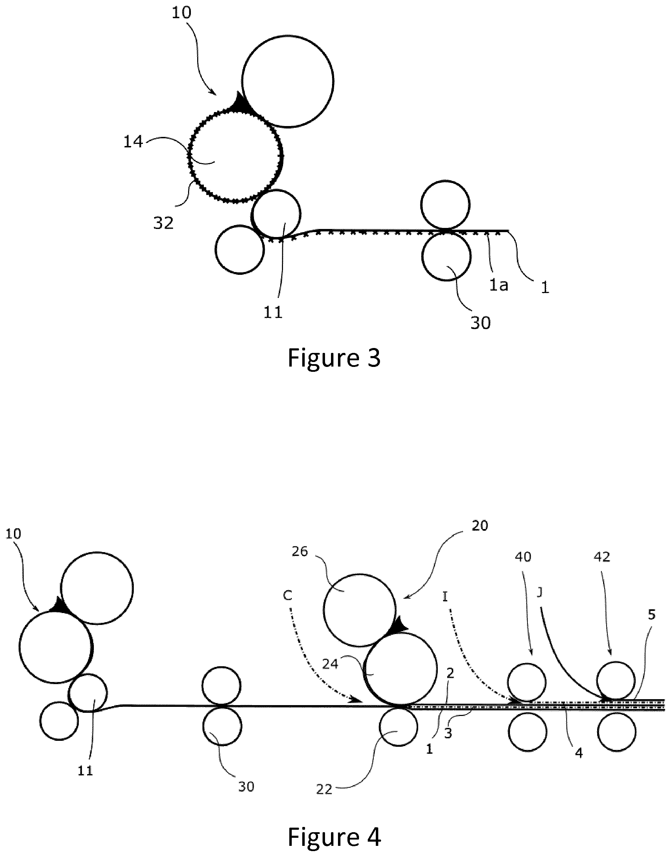

Comme illustré sur la figure 3, l'étape consistant à déplacer de la matière plastique sur la face de la première couche (1) non destinée à être en contact avec la première armature de renfort (3) peut être réalisée par le cylindre (14) de la première calandre (10), celui-ci étant grainé, c'est-à-dire qu'il comprend un motif en relief (34) en saillie et / ou en creux. Ladite face (la) présente alors un grainage.

Alternativement, comme illustré sur la figure 2, dans la variante du procédé selon l'invention utilisant une première extrudeuse à filière plate (50) et une seconde extrudeuse à filière plate (60), les moyens de lamination (70) comprennent au moins un cylindre et l'étape consistant à déplacer de la matière plastique sur la face de la première couche (1) ou de la seconde couche (2) non destinée à être en contact avec la première armature de renfort (3) est réalisée par au moins un cylindre (72, 74) que comprend les moyens de lamination (70). Ledit cylindre (72, 74) comprend alors un motif en relief en saillie et / ou en creux.

Selon l'invention, la première couche (1) ou la seconde couche (2) peuvent être des couches de surface d'un revêtement de sol. Dans ce but, ces couches peuvent être colorées, notamment par la présence de pigments dans leur formule. La première ou deuxième couche peut éventuellement être grainée afin de présenter un décor particulier, voire vernies afin de protéger leur surface du contact des utilisateurs et/ou de faciliter leur nettoyage.

Selon les figures 4, 5 et 6, de façon préférentielle, et quel que soit le procédé selon l'invention, une troisième couche (5) comprenant au moins une matière plastique, et une seconde armature de renfort (4) sont laminées à chaud ensemble avec au moins la première couche (1), la première armature de renfort (3), et la seconde couche (2) superposées dans cet ordre, pour les lier et obtenir un revêtement de sol comprenant successivement au moins la troisième couche (5), la seconde armature de renfort (4), la seconde couche (2), la première armature de renfort (3), la première couche (1).

A cet effet, le procédé selon l'invention comprend au moins des étapes supplémentaires consistant à :
- faire défiler vers les moyens de lamination une seconde armature de renfort (4) ;
- faire défiler vers les moyens de lamination une troisième couche (5) comprenant au moins une matière plastique ;
- laminer à chaud ensemble au moins la troisième couche (5), la seconde armature de renfort (4), la seconde couche (2), la première armature de renfort (3), la première couche (1) superposées dans cet ordre pour les lier et former le revêtement de sol.

Le revêtement de sol obtenu comprend alors au moins trois couches comprenant une matière plastique, chacune des couches présentant une épaisseur comprise entre 0,5mm et 3mm. Préférentiellement, chacune des couches comprenant une matière plastique présente une épaisseur comprise entre 1 et 2mm. L'épaisseur de chaque couche est bien entendu indépendante de l'épaisseur de chacune des autres couches. L'épaisseur du revêtement de sol obtenu varie ainsi entre 1,5mm et 9mm environ, préférentiellement entre 3mm et 6mm environ.

De façon avantageuse et afin d'obtenir un procédé totalement continu, le procédé selon l'invention comprend une étape supplémentaire consistant à :
- réaliser en continu et faire défiler vers des moyens de lamination la troisième couche (5) d'un matériau comprenant au moins une matière plastique au moyen d'une troisième calandre à au moins deux cylindres ou d'une troisième extrudeuse à filière plate;

La figure 4 illustre un procédé de fabrication en continu, reprenant en partie les éléments du procédé décrit selon la figure 1, et permettant d'obtenir un revêtement de sol comprenant une troisième couche (5) comprenant une matière plastique, et une seconde armature de renfort (4). On retrouve donc une première calandre (10) et une seconde calandre (20) à au moins deux cylindres (24, 26). Le procédé selon l'invention permet de réaliser un revêtement de sol en continu, ledit revêtement de sol comprenant une première couche (1) d'un matériau comprenant au moins une matière plastique, une première armature de renfort (3), une seconde couche (2) d'un matériau comprenant au moins une matière plastique, un seconde armature de renfort (4) et une troisième couche (5) comprenant au moins une matière plastique superposées dans cet ordre.

Dans l'exemple de réalisation illustré sur la figure 4, le procédé en continu selon l'invention comprend au moins des étapes consistant à :
- réaliser en continu et faire défiler vers des moyens de lamination (42) la première couche (1) d'un matériau comprenant au moins une matière plastique au moyen de la première calandre (10) à au moins deux cylindres (14, 16);
- réaliser en continu et faire défiler vers les moyens de lamination (42) la seconde couche (2) d'un matériau comprenant au moins une matière plastique au moyen de la seconde calandre (20) à au moins deux cylindres (24, 26);
- faire défiler vers les moyens de lamination (42) une première armature de renfort (3) ;
- faire défiler vers les moyens de lamination (42) une seconde armature de renfort (4) ;
- faire défiler vers les moyens de lamination (42) une troisième couche (5) d'un matériau comprenant au moins une matière plastique ;
- laminer à chaud ensemble au moins la première couche (1), la première armature de renfort (3), la seconde couche (2), la seconde armature de renfort (4) et la troisième couche (5) superposées dans cet ordre pour les lier et former le revêtement de sol.

Selon la figure 4, des moyens de lamination intermédiaire (22, 24) laminent à chaud ensemble la première couche (1), la première armature de renfort (3), et la seconde couche (2) superposées dans cet ordre pour les lier. La première armature de renfort (3) est ainsi introduite pour la faire défiler entre la première et la seconde couche selon la flèche C. Des moyens de lamination de la seconde armature (40) disposés entre les moyens de lamination intermédiaire (22, 24) et les moyens de lamination (42) laminent à chaud ensemble la première couche (1), la première armature de renfort (3), la seconde couche (2) et la seconde armature (4) superposées dans cet ordre pour les lier. La seconde armature de renfort (4) est ainsi introduite pour la faire défiler sur la face de la seconde couche n'étant pas destinée à être en contact avec la première armature de renfort (3) et selon la flèche I . Enfin, les moyens de lamination (42) laminent à chaud ensemble la première couche (1), la première armature de renfort (3), la seconde couche (2), la seconde armature (4) et la troisième couche (5) superposées dans cet ordre pour les lier. La troisième couche (5) est ainsi introduite et disposée sur la face de la seconde armature de renfort n'étant pas destinée à être en contact avec la seconde couche et selon la flèche J.

La seconde couche étant réalisée en continu, à mesure qu'elle défile celle-ci atteint les moyens de lamination de la seconde armature (40) à une température suffisante et répartie de façon assez homogène pour garantir une bonne pénétration de la seconde armature (4) dans la première couche (2). La troisième couche (5) est alors chauffée ou avantageusement réalisée en continu et défile vers les même moyens de lamination (42) de manière à ce que sa température soit également suffisante et répartie de façon assez homogène pour garantir une très bonne pénétration de la seconde armature (4) dans la troisième couche (5). Chaque couche est ainsi suffisamment fondue et homogène en température pour ne pas déformer les armatures de renfort tout en les imprégnant suffisamment.

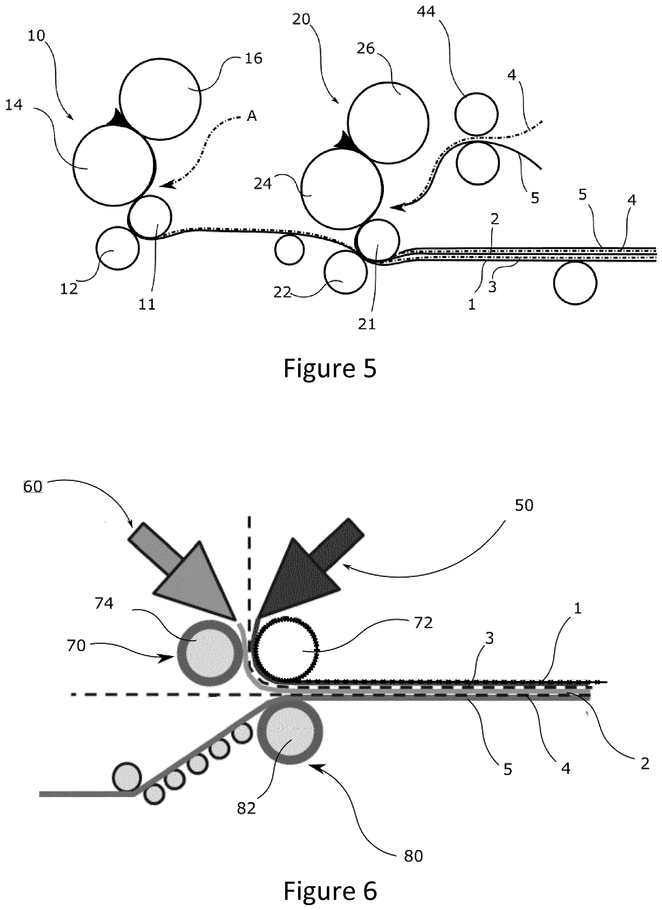

Dans l'exemple de réalisation illustré sur la figure 5, le procédé en continu selon l'invention comprend au moins des étapes consistant à :
- réaliser en continu et faire défiler vers des moyens de lamination (21, 22) la première couche (1) d'un matériau comprenant au moins une matière plastique au moyen de la première calandre (10) à au moins deux cylindres (14, 16);
- réaliser en continu et faire défiler vers les moyens de lamination (21, 22) la seconde couche (2) d'un matériau comprenant au moins une matière plastique au moyen de la seconde calandre (20) à au moins deux cylindres (24, 26);
- faire défiler vers les moyens de lamination (21, 22) une première armature de renfort (3) ;
- faire défiler vers les moyens de lamination (21, 22) une seconde armature de renfort (4) ;
- faire défiler vers les moyens de lamination (21, 22) une troisième couche (5) d'un matériau comprenant au moins une matière plastique
- laminer à chaud ensemble au moins la première couche (1), la première armature de renfort (3), la seconde couche (2), la seconde armature de renfort (4) et la troisième couche (5) superposées dans cet ordre pour les lier et former le revêtement de sol.

Selon la figure 5, des moyens de lamination de la première armature (11, 12) laminent à chaud ensemble la première couche (1) et la première armature de renfort (3) superposées dans cet ordre pour les lier. La première armature de renfort (3) est ainsi introduite pour la faire défiler selon la flèche A à l'entrefer entre le cylindre de la première calandre (14) et le cylindre des sortie (11). Optionnellement, le cylindre (11) exerce une pression suffisante sur le cylindre (14) pour laminer à chaud la première couche (1) et la première armature (3) pour les lier. Ensuite, le cylindre (12) en contre appui sur le cylindre de sortie (11) et formant des moyens de lamination de la première armature (11, 12) vient laminer à chaud la première armature (3) et la première couche (1) pour les lier. Des moyens de lamination de la seconde armature (44) disposés en amont de la seconde calandre laminent à chaud ensemble la troisième couche (5) et la seconde armature de renfort (4) pour les lier. La seconde armature de renfort (4) est ainsi introduite pour la faire défiler sur une face de la troisième couche (5) pour être liées. La troisième couche (5) et la seconde armature de renfort (4) liées sont ensuite introduites à l'entrefer entre le cylindre (24) de la seconde calandre (20) et le cylindre de sortie de la seconde calandre (21). Le cylindre (21) peut ainsi être en contre appui sur le cylindre de la seconde calandre (24). Optionnellement, le cylindre (21) exerce une pression suffisante sur le cylindre (24) pour laminer à chaud la seconde couche (2), la seconde armature (4) et la troisième couche (5), superposées dans cet ordre pour les lier. Enfin, les moyens de lamination (21, 22) laminent à chaud ensemble la première couche (1), la première armature de renfort (3), la seconde couche (2), la seconde armature (4) et la troisième couche (5) superposées dans cet ordre pour les lier. Cette alternative selon la figure 5 permet de limiter l'encombrement des différents moyens de lamination et d'utiliser au maximum des moyens de lamination formé par des cylindres (12, 22) en contre appui sur les cylindres de sortie de la première et de la seconde calandre (11, 21) afin de laminer à chaud sur une première et seconde couches fondues et à une température très homogène. L'ensemble forme une chaine de fabrication d'un revêtement de sol à au moins trois couches comprenant une matière plastique et deux armatures entre couches particulièrement compacte et économe en énergie, tout en garantissant l'obtention d'un revêtement de sol parfaitement stable en dimension.

Dans l'exemple de réalisation illustré sur la figure 6, le procédé en continu selon l'invention comprend au moins des étapes consistant à :
- réaliser en continu et faire défiler vers des moyens de lamination (80) la première couche (1) d'un matériau comprenant au moins une matière plastique au moyen d'une première extrudeuse à filière plate (50);
- réaliser en continu et faire défiler vers les moyens de lamination (80) la seconde couche (2) d'un matériau comprenant au moins une matière plastique au moyen d'une seconde extrudeuse à filière plate (60);
- faire défiler vers les moyens de lamination (80) une première armature de renfort (3) ;
- faire défiler vers les moyens de lamination (80) une seconde armature de renfort (4) ;
- faire défiler vers les moyens de lamination (80) une troisième couche (5) d'un matériau comprenant au moins une matière plastique ;
- laminer à chaud ensemble au moins la première couche (1), la première armature de renfort (3), la seconde couche (2), la seconde armature de renfort (4) et la troisième couche (5) superposées dans cet ordre pour les lier et former le revêtement de sol.

Selon la figure 6, des moyens de lamination intermédiaire (72, 74) disposés en aval de la première et de la seconde extrudeuse et avant les moyens de lamination (80) laminent à chaud ensemble la première couche (1), la première armature de renfort (3) et la seconde couche (2), superposées dans cet ordre pour les lier. Enfin, les moyens de lamination (80), formés par les cylindres (82, 72) laminent à chaud ensemble la première couche (1), la première armature de renfort (3), la seconde couche (2), la seconde armature (4) et la troisième couche (5) superposées dans cet ordre pour les lier. Cette alternative selon la figure 6 permet de limiter l'encombrement des différents moyens de lamination et de laminer à chaud sur une première et seconde couches fondues et à une température très homogène. L'ensemble forme une chaine de fabrication d'un revêtement de sol à au moins trois couches comprenant une matière plastique et deux armatures entre couches particulièrement compacte et économe en énergie, tout en garantissant l'obtention d'un revêtement de sol parfaitement stable en dimension. Avantageusement, le cylindre (72) est grainé, de manière à réaliser une étape de déplacement de la matière sur la face de la première couche (1) en contact avec le cylindre (72).

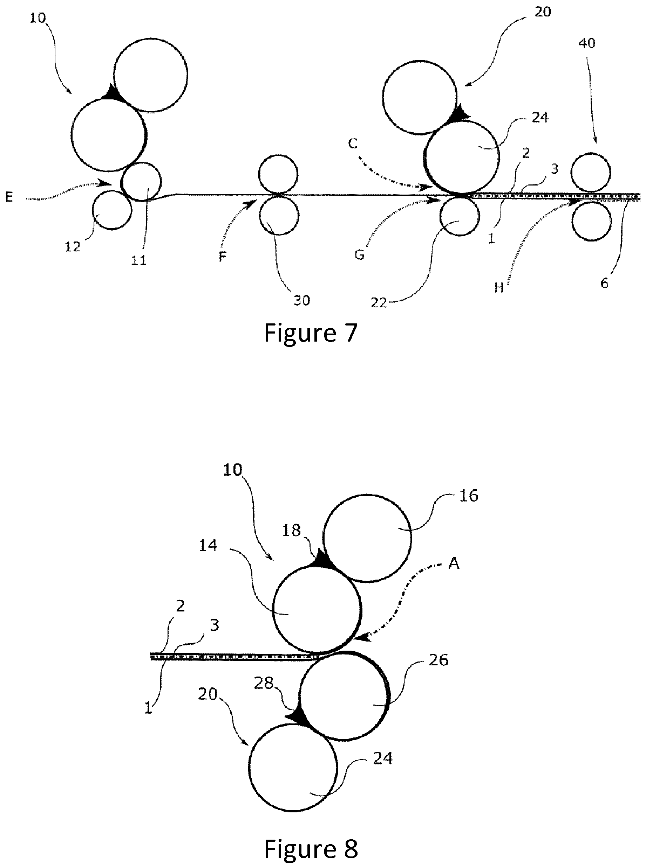

Selon la figure 7, de façon préférentielle, et quel que soit le procédé selon l'invention, une sous-couche fonctionnelle (6) est déposée sur une face de la première couche ou de la seconde couche, non destinée à être en contact avec la première armature de renfort, et est laminée à chaud ensemble avec au moins la première couche (1), la première armature de renfort (3), et la seconde couche (2) superposées dans cet ordre. La face de la première couche ou de la seconde couche étant suffisamment chaude quand celle-ci vient d'être réalisée, il est ainsi possible de laminer à chaud la sous-couche fonctionnelle (6) sans avoir à réchauffer la première ou la seconde couche et d'obtenir une bonne adhésion de la sous-couche fonctionnelle dans la couche.

Avantageusement, ladite sous-couche fonctionnelle (6) est un film préadhésivé, un textile non-tissé, une couche barrière, une mousse, une couche comportant des électrodes ou des capteurs électroniques. Ladite sous-couche fonctionnelle permet ainsi d'apporter au revêtement de sol des fonctions d'isolation thermique, d'isolation phonique, de chauffage, d'amortissement, de détection de personne ou encore de récupération d'énergie.

Dans l'exemple de réalisation illustré sur la figure 7, le procédé en continu selon l'invention comprend au moins des étapes supplémentaire consistant à :
- réaliser en continu et faire défiler vers des moyens de lamination (40) la première couche (1) d'un matériau comprenant au moins une matière plastique au moyen d'une première calandre (10);
- réaliser en continu et faire défiler vers les moyens de lamination (40) la seconde couche (2) d'un matériau comprenant au moins une matière plastique au moyen d'une seconde calandre (20);
- faire défiler vers les moyens de lamination (40) une première armature de renfort (3) ;
- faire défiler vers les moyens de lamination (40) une sous-couche fonctionnelle (6)
- laminer à chaud ensemble au moins la sous-couche fonctionnelle (6), la première couche (1), la première armature de renfort (3), superposées dans cet ordre pour les lier et former le revêtement de sol.

Alternativement, la sous couche fonctionnelle (6) peut être introduite selon la flèche E pour être laminée à chaud par les moyens de lamination (11, 12) et liée à la première couche (1).

Alternativement, la sous couche fonctionnelle (6) peut être introduite selon la flèche F pour être laminée à chaud par les moyens de lamination intermédiaire (30) et liée à la première couche (1).

Alternativement, la sous couche fonctionnelle (6) peut être introduite selon la flèche G pour être laminée à chaud par les moyens de lamination intermédiaire (22, 24) et liée à la première couche (1).

Alternativement, la sous couche fonctionnelle (6) peut être introduite selon la flèche H pour être laminée à chaud par les moyens de lamination (40) et liée à la première couche (1), la première armature (3) et la seconde couche (3) superposées dans cet ordre.

De façon alternative, et quel que soit le procédé selon l'invention, une couche de surface comprenant au moins une matière plastique, et un film imprimé peuvent être laminées à chaud ensemble avec au moins la première couche (1), la première armature de renfort (3), et la seconde couche (2) superposées dans cet ordre, pour les lier et obtenir un revêtement de sol comprenant successivement au moins la couche de surface, le film imprimé, la seconde couche (2), la première armature de renfort (3), la première couche (1). La couche de surface (5) est dans ce cas préférentiellement une couche transparente ou translucide afin de pouvoir observer le décor visible sur le film imprimé tout en le protégeant. Cette couche est généralement plus fine que les première et deuxième couches. A titre d'exemple, l'épaisseur de la couche de surface est comprise entre 0,1mm et 1mm. Une formulation d'une couche de surface comprenant au moins une matière plastique tel que du PVC et ne contenant pas de charges est par exemple appropriée.

Un film imprimé, par exemple en PVC imprimé, est particulièrement fin, son épaisseur étant généralement comprise entre 50 et 100 µm. De ce fait il n'est pas nécessaire de le chauffer pour le lier à la couche de surface et à la seconde couche (2) de matière plastique, celles-ci étant suffisamment chaudes pour que l'adhésion du film imprimé soit parfaite après l'étape de lamination à chaud.

A cet effet, le procédé selon l'invention comprend au moins des étapes supplémentaires consistant à :
- faire défiler vers les moyens de lamination un film imprimé ;
- faire défiler vers les moyens de lamination une couche de surface comprenant au moins une matière plastique ;
- laminer à chaud ensemble au moins la troisième couche (5), le film imprimé la seconde couche (2), la première armature de renfort (3), la première couche (1) superposées dans cet ordre pour les lier et former le revêtement de sol.

De façon avantageuse et afin d'obtenir un procédé totalement continu, le procédé selon l'invention comprend une étape supplémentaire consistant à :
- réaliser en continu et faire défiler vers les moyens de lamination la couche de surface d'un matériau comprenant au moins une matière plastique au moyen d'une troisième calandre à au moins deux cylindres ou d'une troisième extrudeuse à filière plate.

De façon avantageuse et afin d'améliorer la continuité du procédé, le procédé selon l'invention peut comprendre une étape alternative de réalisation de la troisième couche (5) consistant à :
- réaliser en continu par enduction couche de surface (5) sur la face du film imprimé non destinée à être en contact avec la deuxième couche (2) et pendant que celui-ci défile vers les moyens de lamination.

De façon avantageuse et afin d'obtenir d'améliorer la continuité du procédé, le procédé selon l'invention peut comprendre une étape alternative d'impression d'un film destiné à être imprimé consistant à :
- faire défiler un film destiné à être imprimé vers les moyens de lamination
- Imprimer en ligne ledit film afin d'obtenir le film imprimé, pendant que celui-ci défile vers les moyens de lamination et avant que le film imprimé obtenu ne soit lié à la troisième couche (5)

Selon la figure 8, il est décrit un procédé alternatif de réalisation d'un revêtement de sol selon l'invention utilisant une première (10) et une seconde calandre (20), celles-ci étant disposées en S de manière à former une calandre à quatre cylindres en S. Dans cette alternative, la première armature (3) défile en continu entre les cylindres (14) de la première calandre et (26) de la deuxième calandre. Les moyens de lamination de la première couche (1), la première armature (3) et la deuxième couche (2) sont constitués par l'entrefer entre les cylindres (14) et (26). De cette manière, la chaleur apportée pour la réalisation en continue des première et deuxième couches et directement réutilisée pour la lamination complète du revêtement de sol. Le procédé ainsi obtenu présente un encombrement particulièrement réduit et une optimisation de l'énergie utilisée tout en garantissant une très bonne stabilité dimensionnelle du revêtement de sol obtenu.

D'autres variantes du procédé selon l'invention pourront bien sûr être envisagées, notamment en remplaçant la première ou la seconde calandre par une première ou seconde extrudeuse à filière plate, ceci permettant d'obtenir des constructions de revêtement particulières.

Des étapes supplémentaires du procédé selon l'invention tel que des étapes de finition du revêtement de sol pourront également être envisagées. Le revêtement de sol obtenu avant ces étapes de finition est alors considéré comme une structure multicouche semi-ouvrée destinée à former un revêtement de sol. Ces étapes peuvent par exemple consisté au dépôt d'un vernis sur la face de la première, seconde ou troisième couche destinée à être en contact avec l'utilisateur ou encore une étape d'application d'un traitement de surface destinée à améliorer la glissance ou à faciliter le nettoyage. D'autres étapes de finitions classiques du revêtement de sol peuvent être envisagées telles que le grainage, l'impression, le traitement de surface, ou toute étape permettant d'améliorer la durabilité, la résistance à l'usure, la résistance aux tâches ou encore les performances mécaniques. Des étapes d'ajout de couches supplémentaires au revêtement de sol pourront également être effectuées sans sortir du cadre du procédé selon l'invention.

## Revendications

1. Procédé de fabrication en continu d'un revêtement de sol, comprenant au moins des étapes consistant à :
- réaliser en continu et faire défiler vers des moyens de lamination (22, 24) une première couche (1) d'un matériau comprenant au moins une matière plastique au moyen d'une première calandre (10) à au moins deux cylindres (14, 16);
- réaliser en continu et faire défiler vers les moyens de lamination (22, 24) une seconde couche (2) d'un matériau comprenant au moins une matière plastique au moyen d'une seconde calandre (20) à au moins deux cylindres (24, 26);
- faire défiler vers les moyens de lamination (22, 24) une première armature de renfort (3) ;
- laminer à chaud ensemble au moins la première couche (1), la première armature de renfort (3), et la seconde couche (2) superposées dans cet ordre;
***caractérisé* en ce qu'**une couche de surface comprenant au moins une matière plastique et un film imprimé sont laminés à chaud ensemble avec au moins la première couche (1), la première armature de renfort (3), et la seconde couche (2) superposées dans cet ordre, pour les lier et obtenir un revêtement de sol comprenant successivement au moins la couche de surface, le film imprimé, la seconde couche (2), la première armature de renfort (3), la première couche (1).

2. Procédé de fabrication en continu d'un revêtement de sol, comprenant au moins des étapes consistant à :
- réaliser en continu et faire défiler vers des moyens de lamination (70) une première couche (1) d'un matériau comprenant au moins une matière plastique au moyen d'une première extrudeuse à filière plate (50);
- réaliser en continu et faire défiler vers les moyens de lamination (70) une seconde couche (2) d'un matériau comprenant au moins une matière plastique au moyen d'une seconde extrudeuse à filière plate (60);
- faire défiler vers les moyens de lamination (70) une première armature de renfort (3) ;
- laminer à chaud ensemble au moins la première couche (1), la première armature de renfort (3), et la seconde couche (2) superposées dans cet ordre;
***caractérisé* en ce qu'**une couche de surface comprenant au moins une matière plastique et un film imprimé sont laminés à chaud ensemble avec au moins la première couche (1), la première armature de renfort (3), et la seconde couche (2) superposées dans cet ordre, pour les lier et obtenir un revêtement de sol comprenant successivement au moins la couche de surface, le film imprimé, la seconde couche (2), la première armature de renfort (3), la première couche (1).

3. Procédé selon l'une quelconque des revendications 1 ou 2, ***caractérisé* en ce qu'**il comprend une étape supplémentaire consistant à laminer à chaud ensemble au moins la première armature de renfort (3) et la première couche (1) pour les lier, avant de laminer à chaud ensemble au moins la première couche (1), la première armature de renfort (3), et la seconde couche (2).

4. Procédé selon l'une quelconque des revendications 1 ou 2, ***caractérisé* en ce que** la première couche (1), la première armature de renfort (3), et la seconde couche (2) sont laminées à chaud ensemble simultanément pour les lier et former le revêtement de sol.

5. Procédé selon la revendication 3, ***caractérisé* en ce que** l'étape consistant à laminer à chaud ensemble la première armature de renfort (3) et la première couche (1) pour les lier est réalisée par l'intermédiaire d'un cylindre (11) en contre-appui avec l'un des cylindres (14) de la première calandre (10).

6. Procédé selon la revendication 3, ***caractérisé* en ce que** l'étape consistant à laminer à chaud ensemble la première armature de renfort (3) et la première couche (1) est réalisée par des moyens de lamination intermédiaires (30) disposés entre la première calandre (10) et les moyens de lamination (22, 24) ou respectivement entre la première extrudeuse à filière plate (50) et les moyens de lamination (70).

7. Procédé selon la revendication 1, ***caractérisé* en ce que** les moyens de lamination (22, 24) se présentent sous la forme d'un cylindre (22) en contre-appui avec l'un des cylindres (24) de la seconde calandre (20).

8. Procédé suivant l'une quelconque des revendications 1 ou 2, ***caractérisé* en ce que** le procédé comprend une étape supplémentaire consistant à déplacer et/ou supprimer de la matière plastique sur une face de la première couche (1) ou de la seconde couche (2), non destinée à être en contact avec la première armature de renfort (3).

9. Procédé selon la revendication 8, ***caractérisé* en ce que** l'étape consistant à déplacer de la matière plastique sur la face de la première couche (1) ou de la seconde couche (2) est réalisée par au moins l'un des cylindres (14) de la première calandre (10) ou respectivement par au moins l'un des cylindres (24) de la seconde calandre (20), ledit cylindre (14, 24) comprenant un motif en relief.

10. Procédé selon la revendication 8, ***caractérisé* en ce que** l'étape consistant à déplacer de la matière plastique sur la face de la première couche (1) ou de la seconde couche (2) est réalisée par au moins un cylindre (72, 74) que comprend les moyens de lamination (70).

11. Procédé selon l'une quelconque des revendications 1 ou 2, ***caractérisé* en ce qu'**une troisième couche (5) comprenant au moins une matière plastique, et une seconde armature de renfort (4) sont laminées à chaud ensemble avec au moins la première couche (1), la première armature de renfort (3), et la seconde couche (2) superposées dans cet ordre, pour les lier et obtenir un revêtement de sol comprenant successivement au moins la troisième couche (5), la seconde armature de renfort (4), la seconde couche (2), la première armature de renfort (3), la première couche (1).

12. Procédé selon l'une quelconque des revendications 1 ou 2 ***caractérisé* en ce qu'**une sous-couche fonctionnelle (6) est déposée sur une face de la première couche (1) ou de la seconde couche (2), non destinée à être en contact avec la première armature de renfort (3), et est laminée à chaud ensemble avec au moins la première couche (1), la première armature de renfort (3), et la seconde couche (2) superposées dans cet ordre.

13. Procédé selon la revendication 12, ***caractérisé* en ce que** ladite sous-couche fonctionnelle (6) est un film préadhésivé, un textile non-tissé, une couche barrière, une mousse, une couche comportant des électrodes ou des capteurs électroniques.

## Patentansprüche

1. Verfahren zur kontinuierlichen Herstellung eines Bodenbelags, das mindestens die folgenden Schritte umfasst:
- kontinuierliche Fertigung und Weiterleitung zu Laminiervorrichtungen (22, 24) der ersten Schicht (1) eines Materials mit mindestens einem Kunststoff, mittels eines ersten Kalanders (10) und mindestens zwei Walzen (14, 16);
- kontinuierliche Fertigung und Weiterleitung zu Laminiervorrichtungen (22, 24) einer zweiten Schicht (2) eines Materials mit mindestens einem Kunststoff mittels eines zweiten Kalanders (20) und mindestens zwei Walzen (24, 26);
- Weiterleitung an die Laminiervorrichtungen (22, 24) eines ersten Verstärkungsrahmens (3);
- gemeinsam Warmwalzen mindestens der ersten Schicht (1), des ersten Verstärkungsrahmens (3) und der zweiten Schicht (2), in dieser Reihenfolge übereinandergeschichet, **dadurch gekennzeichnet, dass** eine Oberflächenschicht mit mindestens einem Kunststoffmaterial und eine bedruckte Folie gemeinsam mit mindestens der ersten Schicht (1), dem ersten Verstärkungsrahmen (3) und der zweiten Schicht (2) in dieser Reihenfolge übereinandergeschichtet warmgewalzt werden, um sie miteinander zu verbinden und einen Bodenbelag zu erhalten, der nacheinander mindestens die Oberflächenschicht, die bedruckte Folie, die zweite Schicht (2), den ersten Verstärkungsrahmen (3) und die erste Schicht (1) umfasst.

2. Verfahren zur kontinuierlichen Herstellung eines Bodenbelags, das mindestens die folgenden Schritte umfasst:
- kontinuierliche Fertigung und Weiterleitung zu Laminiervorrichtungen (70) der ersten Schicht (1) eines Materials mit mindestens einem Kunststoff mittels eines ersten Extruders mit Flachfoliendüse (50);
- kontinuierliche Fertigung und Weiterleitung zu Laminiervorrichtungen (70) einer zweiten Schicht (2) eines Materials mit mindestens einem Kunststoff, mittels eines zweiten Extruders mit Flachfoliendüse (60);
- Weiterleitung an die Laminiervorrichtungen (70) eines ersten Verstärkungsrahmens (3);
- gemeinsam Warmwalzen mindestens der ersten Schicht (1), des ersten Verstärkungsrahmens (3) und der zweiten Schicht (2), in dieser Reihenfolge übereinandergeschichtet,
***dadurch gekennzeichnet, dass*** die Oberflächenschicht mit mindestens einem Kunststoff und einer bedruckten Folie zusammen, mit mindestens der ersten Schicht (1), dem ersten Verstärkungsrahmen (3) und der zweiten Schicht (2) in dieser Reihenfolge übereinandergeschichtet warmgewalzt werden, um sie miteinander zu verbinden und einen Bodenbelag zu erhalten, der nacheinander mindestens die Oberflächenschicht, die bedruckte Folie, die zweite Schicht (2), den ersten Verstärkungsrahmen (3) und die erste Schicht (1) umfasst.

3. Verfahren nach einem der vorstehenden Ansprüche 1 oder 2, ***dadurch gekennzeichnet, dass*** es einen zusätzlichen Schritt umfasst, der darin besteht, mindestens den ersten Verstärkungsrahmen (3) und die erste Schicht (1) gemeinsam warm zu walzen, bevor mindestens die erste Schicht (1), der erste Verstärkungsrahmen (3) und die zweite Schicht (2) gemeinsam warm gewalzt werden.

4. Verfahren nach einem der Ansprüche 1 oder 2, ***dadurch gekennzeichnet, dass*** die erste Schicht (1), der erste Verstärkungsrahmen (3) und die zweite Schicht (2) gleichzeitig zusammen warm gewalzt werden, um sie zu verbinden und den Bodenbelag zu bilden.

5. Verfahren nach Anspruch 3, ***dadurch gekennzeichnet, dass*** der Schritt, der darin besteht, den ersten Verstärkungsrahmen (3) und die erste Schicht (1) gemeinsam warm zu walzen, um sie zu verbinden, über einen Walze (11) als Widerlager zu einer der Walzen (14) des ersten Kalanders (10) ausgeführt wird.

6. Verfahren nach Anspruch 3, ***dadurch gekennzeichnet, dass*** der Schritt, der im gemeinsamen Warmwalzen des Verstärkungsrahmens (3) und der ersten Schicht (1) besteht, durch zwischenliegende Laminiervorrichtungen (30) ausgeführt wird, die zwischen dem ersten Kalander (10) und den Laminiervorrichtungen (22, 24) oder jeweils zwischen dem ersten Extruder mit Flachfoliendüse (50) und den Laminiervorrichtungen (70) angeordnet sind.

7. Verfahren nach Anspruch 1, ***dadurch gekennzeichnet, dass*** die Laminiervorrichtungen (22, 24) die Form einer Walze (22) als Widerlager zu einer der Walzen (24) des zweiten Kalanders (20) hat.

8. Verfahren nach einem der Ansprüche 1 oder 2, ***dadurch gekennzeichnet, dass*** das Verfahren einen zusätzlichen Schritt umfasst, der darin besteht, Kunststoff auf einer Seite der ersten Schicht (1) oder der zweiten Schicht (2), die keinen Kontakt mit dem ersten Verstärkungsrahmen (3) haben soll, zu verschieben und/ oder wegfallen zu lassen.

9. Verfahren nach Anspruch 8, ***dadurch gekennzeichnet, dass*** der Schritt, der darin besteht, den Kunststoff auf der Seite der ersten Schicht (1) oder der zweiten Schicht (2) zu verschieben, durch mindestens eine der Walzen (14) des ersten Kalanders (10) oder jeweils durch mindestens eine der Walzen (24) des zweiten Kalanders (20) durchgeführt wird, wobei diese Walze (14, 24) ein Reliefmotiv umfasst.

10. Verfahren gemäß Anspruch 8, **dadurch gekennzeichnet, dass** der Schritt, der darin besteht, den Kunststoff auf der Seite der ersten Schicht (1) oder der zweiten Schicht (2) zu verschieben, durch mindestens eine der Walzen (72, 74) der Laminiervorrichtung (70) ausgeführt wird.

11. Verfahren gemäß einem der Ansprüche 1 oder 2, ***dadurch gekennzeichnet, dass*** eine dritte Schicht (5) mit mindestens einem Kunststoff und einem zweiten Verstärkungsrahmen (4) gemeinsam warmgewalzt werden mit mindestens der ersten Schicht (1), dem ersten Verstärkungsrahmen (3) und der zweiten Schicht (2) in dieser Reihenfolge übereinandergeschichtet, um sie miteinander zu verbinden und einen Bodenbelag zu erhalten, der nacheinander mindestens die dritte Schicht (5), den zweiten Verstärkungsrahmen (4), die zweite Schicht (2), den ersten Verstärkungsrahmen (3) und die erste Schicht (1) umfasst.

12. Verfahren gemäß einem der Ansprüche 1 oder 2, ***dadurch gekennzeichnet, dass*** eine auf einer Seite der ersten Schicht (1) oder der zweiten Schicht (2) aufgebrachte funktionelle Unterschicht (6), die keinen Kontakt mit dem ersten Verstärkungsrahmen (3) haben soll, gemeinsam mit mindestens der ersten Schicht (1), dem ersten Verstärkungsrahmen (3) und der zweiten Schicht (2), in dieser Reihenfolge übereinandergeschichtet, warmgewalzt wird.

13. Verfahren nach Anspruch 12, ***dadurch gekennzeichnet, dass*** es sich bei dieser funktionellen Unterschicht (6) um eine vorbeschichtete Folie, ein Vlies, eine Sperrschicht, einen Schaumstoff oder eine Schicht mit Elektroden oder Sensoren handelt.

## Claims

1. Process of continuous production of a floor covering, incorporating at least the following steps:
- continuously manufacture and drive - towards a lamination system (22, 24) - one first layer (1) of a material incorporating at least one plastic material by means of a first calender (10) with at least two cylinders (14, 16);
- continuously manufacture and reel - to a lamination system (22, 24) - a second layer (2) of a material incorporating at least one plastic material by means of a second calender (20) with at least two cylinders (24, 26);
- drive a first reinforcement armature (3) to the lamination system (22, 24);
- hot-laminate together at least the first layer (1), the first reinforcement armature (3) and the second layer (2), being superimposed in this order;
***characterized* in that** one surface layer incorporating at least one plastic material and one printed film are hot-laminated together with at least the first layer (1), the first reinforcement armature (3) and the second layer (2) - being superimposed in this order - such as to bind them together and produce a floor covering successively incorporating at least the surface layer, the printed film, the second layer (2), the first reinforcement armature (3) and the first layer (1).

2. Process of continuous manufacture of a floor covering, including at least the steps consisting in:
- continuously manufacturing and driving - to a lamination system (70) - a first layer (1) of a material incorporating at least one plastic material by means of a first slot die extruder (50);
- continuously manufacturing and driving - to a lamination system (70) - a second layer (2) of a material incorporating at least one plastic material by means of a second slot die extruder (60);
- driving a first reinforcement armature (3) to the lamination system (70);
- hot-laminating together at least the first layer (1), the first reinforcement armature (3) and the second layer (2), being superimposed in this order;
***characterized* in that** one surface layer incorporating at least one plastic material and a printed film are hot-laminated together with at least the first layer (1), the first reinforcement armature (3) and the second layer (2) - being superimposed in this order - such as to bind them together and produce a floor covering successively incorporating at least the surface layer, the printed film, the second layer (2), the first reinforcement armature (3) and the first layer (1).

3. Process in accordance with either of claims 1 or 2, ***characterized* in that** it includes one additional step consisting in hot-laminating together at least the first reinforcement armature (3) and the first layer (1), such as to bind them together before hot-laminating together at least the first layer (1), the first reinforcement armature (3) and the second layer (2).

4. Process in accordance with either of claims 1 or 2, ***characterized* in that** the first layer (1), the first reinforcement layer (3) and the second layer (2) are simultaneously hot-laminated together, to bind them together and form the floor covering.

5. Process in accordance with claim 3, ***characterized* in that** the step consisting in hot-laminating together the first reinforcement armature (3) and the first layer (1) to bind them together is performed by means of a cylinder (11) bearing against one of the cylinders (14) of the first calender (10).

6. Process in accordance with claim 3, ***characterized* in that** the step consisting in hot-laminating together the first reinforcement armature (3) and the first layer (1) is performed by an intermediate lamination system (30) positioned between the first calender (10) and the lamination system (22, 24) or, respectively, between the first slot die extruder (50) and the lamination system (70).

7. Process in accordance with claim 1, ***characterized* in that** the lamination system (22, 24) takes the form of a cylinder (22) bearing against one of the cylinders (24) of the second calender (20).

8. Process in accordance with either of claims 1 or 2, ***characterized* in that** the process includes one additional step consisting in moving and/or removing plastic material on one face of the first layer (1) or of the second layer (2), not being intended to be in contact with the first reinforcement armature (3).

9. Process in accordance with claim 8, ***characterized* in that** the step consisting in moving plastic material on the face of the first layer (1) or of the second layer (2) is performed by at least one of the cylinders (14) of the first calender (10) or, respectively, by at least one of the cylinders (24) of the second calender (20), with the said cylinder (14,24) bearing a pattern in relief.

10. Process in accordance with claim 8, ***characterized* in that** the step consisting in moving plastic material on the face of the first layer (1) or of the second layer (2) is performed by at least one cylinder (72, 74) incorporated within the lamination system (70).

11. Process in accordance with either of claims 1 or 2, ***characterized* in that** a third layer (5) incorporating at least one plastic material, and a second reinforcement armature (4) are hot-laminated together with at least the first layer (1), the first reinforcement armature (3) and the second layer (2) - being superimposed in this order - such as to bind them together and produce a floor covering successively incorporating at least the third layer (5), the second reinforcement armature (4), the second layer (2), the first reinforcement armature (3) and the first layer (1).

12. Process in accordance with either of claims 1 or 2, ***characterized* in that** a functional sub-layer (6) is positioned on one face of the first layer (1) or of the second layer (2), not being intended to be in contact with the first reinforcement armature (3), and is hot-laminated together with at least the first layer (1), the first reinforcement armature (3) and the second layer (2), being superimposed in this order.

13. Process in accordance with claim 12, ***characterized* in that** the said functional sub-layer (6) is a film with a previously-applied adhesive, a non-woven textile, a barrier layer, a foam, a layer incorporating electrodes or electronic sensors.
